# EUROPEAN PATENT SPECIFICATION

(11) **EP 4 289 171 B1**
(45) Date of publication and mention of the grant of the patent: **21.05.2025**
(21) Application number: 22703690.2
(22) Date of filing: 17.01.2022
(51) Int. Cl.: H04W 24/06, H04L 43/50

(54) **TESTING A NETWORK CONTROL SYSTEM**
TESTEN EINES NETZKONTROLLSYSTEMS
TESTER UN SYSTÈME DE CONTRÔLE DE RÉSEAU

(30) Priority: 04.02.2021 FI 20215119
(43) Date of publication of application: 13.12.2023
(73) Proprietor: Elisa Oyj, 00520 Helsinki (FI)
(72) Inventor: LIUKKONEN, Janne, 00520 Helsinki (FI)
(74) Representative: Espatent Oy
(86) International application number: PCT/FI2022/050028
(87) International publication number: WO 2022/167719

(56) References cited:
- WO-A1-02/098151
- WO-A1-2016/139266
- WO-A1-2020/002772
- WO-A1-97/41657

## Description

### TECHNICAL FIELD

The present application generally relates to controlling telecommunication networks. More particularly, the present application relates to testing a network control system configured to perform automated alarm monitoring and control of a telecommunication network.

### BACKGROUND

This section illustrates useful background information without admission of any technique described herein representative of the state of the art.

For a telecommunication network operator there is a need to monitor operation and performance of the telecommunication network and to take corrective actions when necessary in order to ensure quality of service for the users of the telecommunication network. A network operation center (NOC) is generally a location from which NOC personnel exercises monitoring and control over the network. NOC personnel are responsible for monitoring alarms and other incidents appearing in the network and for deciding upon required actions based on the information from the network.

In order to improve efficiency of network monitoring and control and to reduce the amount of manual work and human errors, various methods have been developed to automatize the NOC and to automatically analyze alarms and other incidents from telecommunication networks and to perform automatic actions based on the information from the network. Such automation is not a straightforward task to implement.

WO 02098151 discloses testing macrodiversity and handover functionality of a radio network controller. WO 2020002772 discloses automated network monitoring and control. WO 2016139266 discloses quality of experience aware transport self organizing network framework.

Now new tools are provided for use in the context of automation of network alarm monitoring and network control.

### SUMMARY

The appended claims define the scope of protection.

According to a first example aspect there is provided a computer implemented method according to enclosed independent method claim. The method is for providing a test system for testing a network control system configured to perform automated alarm monitoring and control of a telecommunication network. The method is performed by
interacting with the network control system over a first interface of the test system, wherein the first interface is configured to emulate operation of a control interface of the telecommunication network;
monitoring over the first interface, whether a command associated with a network device of the telecommunication network is received from the network control system;
based on the received command, providing, over the first interface, to the network control system, one or more responses;
monitoring one or more next actions of the network control system; and
evaluating operation of the network control system based on the received command or lack of received command and/or based on the one or more next actions or lack of next actions.

In some example embodiments, the method further comprises updating and maintaining states of network devices of the telecommunication network in the test system; and taking the states of the network devices into account in the one or more responses.

In some example embodiments, the method further comprises interacting with the control interface of the telecommunication network over a second interface of the test system;
collecting, over the second interface, states of one or more network devices of the telecommunication network; and taking the collected states of the one or more network devices into account in the one or more responses.

In some example embodiments, the method further comprises sending, to the network control system, over the first interface, one or more alerts and/or network performance data in order to trigger the network control system to send the command.

In some example embodiments, the method further comprises monitoring, over the second interface, alerts and/or network performance data appearing in the telecommunication network; and monitoring the first interface in expectation of receiving a command sent responsive to the alerts and/or network performance data appearing in the telecommunication network.

In some example embodiments, the control interface of the telecommunication network is an OSS interface.

In some example embodiments, the received command specifies one or more actions in the network device of the telecommunication network.

In some example embodiments, the command and/or the next action relates to one or more of the following: registering to a network device, resetting a network device, shutting down a network device, login to a network device, blocking a cell.

In some example embodiments, the one or more responses comprise indication of one or more of the following: successful operation, failed operation, successful registration to the network device, failed registration to the network device, successful reset operation, failed reset operation, successful shut down operation, failed shut down operation, successful login operation, failed login operation, successful cell block operation, failed cell block operation, failed connection to the network device, unexpectedly dropped connection to a network device, network device not found, unexpected error.

According to a second example aspect of the present invention, there is provided an apparatus comprising a processor and a memory including computer program code; the memory and the computer program code configured to, with the processor, cause the apparatus to perform the method of the first aspect or any related embodiment.

According to a third example aspect of the present invention, there is provided a computer program comprising computer executable program code which when executed by a processor causes an apparatus to perform the method of the first aspect or any related embodiment.

According to a fourth example aspect there is provided a computer program product comprising a non-transitory computer readable medium having the computer program of the third example aspect stored thereon.

According to a fifth example aspect there is provided an apparatus comprising means for performing the method of the first aspect or any related embodiment. Any foregoing memory medium may comprise a digital data storage such as a data disc or diskette, optical storage, magnetic storage, holographic storage, optomagnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device. Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

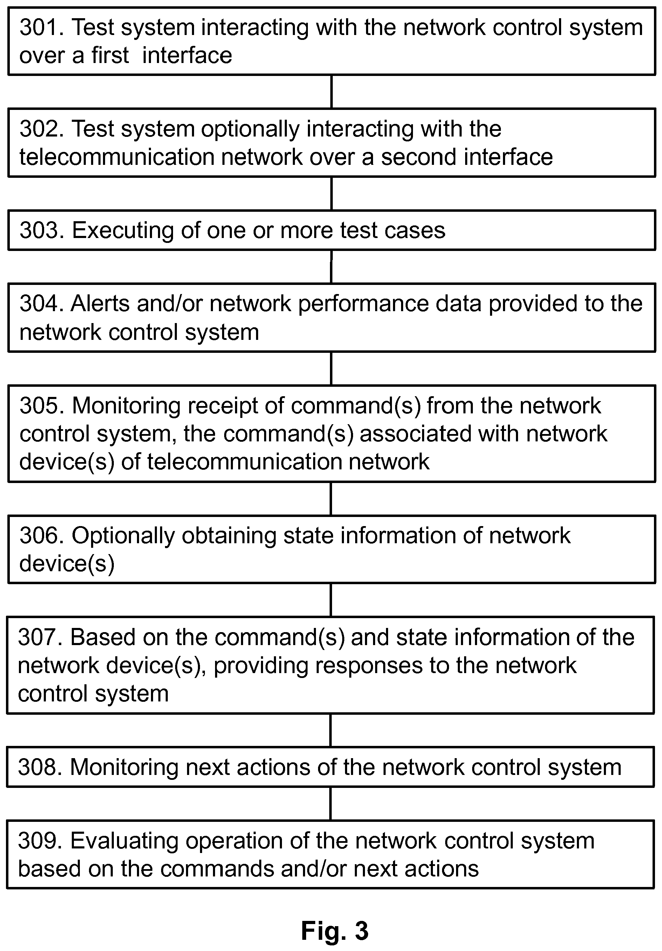

In the following description, the invention is described with particular reference to figure 3, while the description of the remaining figures is provided for illustrative purposes for a better understanding of the invention.

### BRIEF DESCRIPTION OF THE FIGURES

Some example embodiments will be described with reference to the accompanying figures, in which:
- Fig. 1A: schematically shows an example network control scenario;
- Fig. 1B: schematically shows an example scenario according to an example embodiment;
- Fig. 2: shows a block diagram of an apparatus according to an example embodiment;
- Fig. 3: shows a flow diagram illustrating example methods according to certain embodiments; and
- Fig. 4: shows a flow diagram of an example case.

### DETAILED DESCRIPTION

In the following description, like reference signs denote like elements or steps.

Various embodiments of present disclosure provide a test system for testing whether network automation operates as intended. The network automation comprises a network control system that monitors network and performs automatic corrective actions and failure correction in attempt to improve operation of the network. The test mechanisms provided are operable to test whether the network control system results in performing sensible actions.

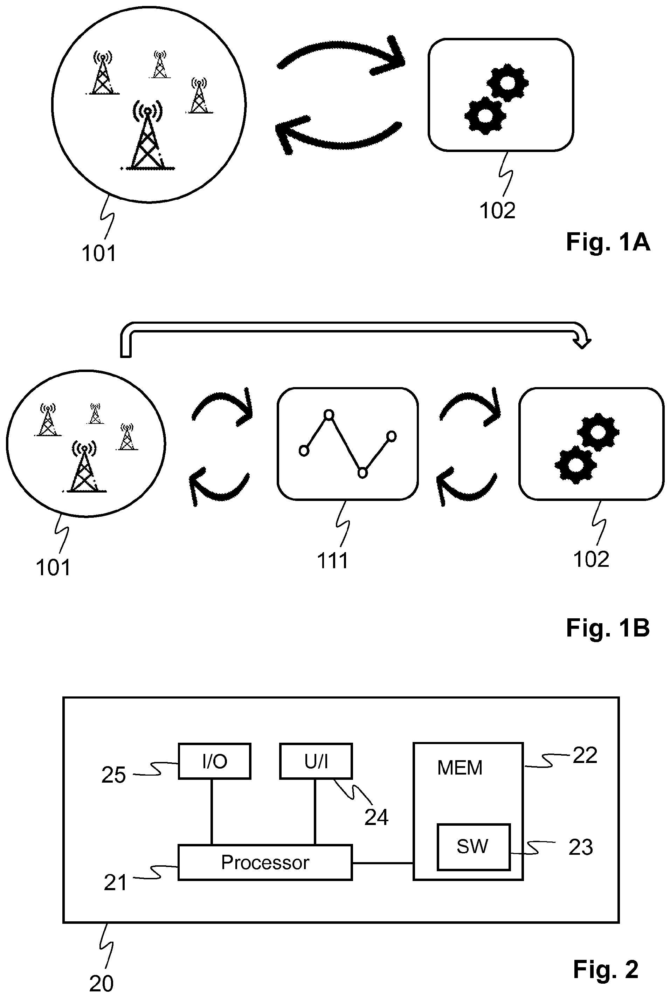

Fig. 1A shows an example scenario. The scenario shows a telecommunication network 101 comprising a plurality of physical network sites comprising base stations and other network devices, and a network control system 102 configured to automatically monitor and control the telecommunication network 101. The network control system 102 is configured to interact with the telecommunication network (e.g. through an operations support system, OSS, interface), to automatically analyze alarms and other incidents from the telecommunication network 101 and to perform automatic actions and failure correction in the telecommunication network 101 based on this information. In this scenario, the network control system is in normal operation.

Fig. 1B shows an example scenario according to an embodiment. The scenario shows a test system 111 in addition to the telecommunication network 101 and the network control system 102 of Fig. 1A. In this scenario, operation of the network control system 102 is being tested. The test system 111 is configured to interact with the network control system 102 and to emulate operation of the telecommunication network 101 in view of the network control system 102. Additionally, the test system 111 may be configured to interact with the telecommunication network 101 for example to obtain real time state information from production environment. The test system 111 is configured to implement at least some example embodiments of present disclosure. The messages that would travel between the network control system and the control interface of the telecommunication network, when the network control system is in production use, are now configured to travel to or through the test system. However, also in this scenario, the network control system 102 and the telecommunication network 101 may interact with each other at least to some extent.

Fig. 2 shows a block diagram of an apparatus 20 according to an embodiment. The apparatus 20 is for example a general-purpose computer or server or some other electronic data processing apparatus. The apparatus 20 can be used for implementing at least some embodiments of the invention. That is, with suitable configuration the apparatus 20 is suited for operating for example as the test system 111 of foregoing disclosure.

The apparatus 20 comprises a communication interface 25; a processor 21; a user interface 24; and a memory 22. The apparatus 20 further comprises software 23 stored in the memory 22 and operable to be loaded into and executed in the processor 21. The software 23 may comprise one or more software modules and can be in the form of a computer program product.

The processor 21 may comprise a central processing unit (CPU), a microprocessor, a digital signal processor (DSP), a graphics processing unit, or the like. Fig. 2 shows one processor 21, but the apparatus 20 may comprise a plurality of processors.

The user interface 24 is configured for providing interaction with a user of the apparatus. Additionally or alternatively, the user interaction may be implemented through the communication interface 25. The user interface 24 may comprise a circuitry for receiving input from a user of the apparatus 20, e.g., via a keyboard, graphical user interface shown on the display of the apparatus 20, speech recognition circuitry, or an accessory device, such as a headset, and for providing output to the user via, e.g., a graphical user interface or a loudspeaker.

The memory 22 may comprise for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 20 may comprise a plurality of memories. The memory 22 may serve the sole purpose of storing data, or be constructed as a part of an apparatus 20 serving other purposes, such as processing data.

The communication interface 25 may comprise communication modules that implement data transmission to and from the apparatus 20. The communication modules may comprise a wireless or a wired interface module(s) or both. The wireless interface may comprise such as a WLAN, Bluetooth, infrared (IR), radio frequency identification (RF ID), GSM/GPRS, CDMA, WCDMA, LTE (Long Term Evolution) or 5G radio module. The wired interface may comprise such as Ethernet or universal serial bus (USB), for example. The communication interface 25 may support one or more different communication technologies. The apparatus 20 may additionally or alternatively comprise more than one of the communication interfaces 25.

A skilled person appreciates that in addition to the elements shown in Fig. 2, the apparatus 20 may comprise other elements, such as displays, as well as additional circuitry such as memory chips, application-specific integrated circuits (ASIC), other processing circuitry for specific purposes and the like. Further, it is noted that only one apparatus is shown in Fig. 2, but the embodiments of the invention may equally be implemented in a cluster of shown apparatuses.

Fig. 3 shows a flow diagram illustrating example methods according to certain embodiments. The methods may be implemented in the test system 111 of Fig. 1 and/or in the apparatus 20 of Fig. 2. The methods are implemented in a computer and do not require human interaction unless otherwise expressly stated. It is to be noted that the methods may however provide output that may be further processed by humans and/or the methods may require user input to start. Different phases shown in the flow diagrams may be combined with each other and the order of phases may be changed except where otherwise explicitly defined. Furthermore, it is to be noted that performing all phases of the flow diagram is not mandatory.

The method of Fig. 3 comprises the following phases:
301: The test system interacts with the network control system over a first interface. The network control system is configured to perform automated alarm monitoring and control of a telecommunication network. The network control system may be further configured to perform automated failure correction in the telecommunication network. The purpose of the test system is to test operation of the network control system. The first interface is configured to emulate operation of a control interface of the telecommunication network. Such control interface is used by the network control system for interacting with the telecommunication network when the network control system is in use and monitors production environment (i.e. telecommunication network that is in actual use). The control interface may be for example OSS interface and the first interface may emulate operation of the OSS interface.

The use of the test system may be initiated by setting the network control system to interact with the first interface of the test system instead of interacting with the control interface of the telecommunication network. Alternatively, any interaction intended to the control interface of the telecommunication network may be intercepted by the test system so that changes are not needed in the network control system.

302: The test system optionally interacts with the control interface of the telecommunication network (i.e. the production environment) over a second interface. I.e. the test system may interact with the OSS interface of the telecommunication network.

303: The test system executes a test case or a chain of interrelated test cases by monitoring operation of the network control system through the first interface. Additionally or alternatively, plurality of independent test cases may be consecutively executed. Each test case comprises performing at least some of the phases 304-309. Each test case may comprise certain predefined parameters or rules according to which respective test case is executed.

304: Alerts and/or network performance data are provided to the network control system to trigger a test case. These may be provided through the first interface or obtained from other source as will be explained below. An alert is in general a notification of a problem in a network device. There may be different types of alerts. Network performance data refers for example to Key Performance Indicator KPI data that is available in telecommunication networks. KPI data may relate to signal quality, signal levels, signal to noise ratio, handover parameters, number of users, number of dropped calls and the like.

In an embodiment, the network control system receives alerts and/or network performance data from production environment and the test system monitors operation of the network control system triggered by the alerts and/or network performance data from production environment. In such embodiment, the test system may monitor, over the second interface, alerts and/or network performance data appearing in the telecommunication network in order to know when and which actions should be triggered in the network control system. The triggered actions may then be monitored through the first interface.

In another embodiment, the test system provides alerts and/or network performance data to the network control system to trigger one or more actions in the network control system. This may be done by the test system through the first interface or by writing the alerts and/or network performance data to an input source that is normally monitored by the network control system. In such case, interaction with the production environment is not necessarily needed.

305: The test system monitors whether a command associated with a network device of the telecommunication network is received over the first interface. The command is expected to be triggered responsive to the alerts and/or network performance data provided in phase 304. The command should be received through the first interface if the network control system is operating normally. The receipt of the command may be monitored for a predefined period of time. Depending on the test case and the alerts/network performance data that is involved, the command should be seen within certain time window. The predefined period of time is set to cover at least this time window. The test case that is being executed may define the time period that is to be used. It is to be noted that setting the predefined period of time is not mandatory. Alternatively, the test system may be set to wait until a command is received from the network control system.

306: In some embodiments, the test system obtains states of network devices of the telecommunication network.

In an embodiment, states of the network devices are updated and maintained internally in the test system. Initial state of the network devices may be defined in the respective test case. Additionally or alternatively, the states of the network devices may be reset to initial setting between test cases (i.e. before starting the next test case). In an embodiment, where a chain of interrelated test cases are executed, states of network devices of the telecommunication network are in general updated and maintained over the chain of test cases without resetting the states between the cases. The states of the network devices may be updated according to commands from the network control system. Additionally or alternatively, predefined parameters of the respective test case may be taken into account in updating the states of the network devices. Updating and maintaining states of the network devices provides that the test system emulates operation of the telecommunication network.

In another embodiment, the test system collects the states of the network devices over the second interface form the production environment. In this way, an actually existing combination of states of network devices can be obtained. Thereby, improved emulation of operation of the telecommunication network may be achieved. This option suits well with the test cases triggered by alerts and/or network performance data received from the production environment. By triggering the test cases by alerts and/or network performance data received from the production environment and using states collected from the production environment, the test system tends to test operation of the network control system in real situations that actually exist in the production environment.

In some embodiments, the command specifies one or more actions in a network device of the telecommunication network e.g. for the purpose of failure correction. The command may relate to one or more of the following: registering to a network device, resetting a network device, shutting down a network device, login to a network device, blocking a cell.

307: Based on the received command, one or more responses are provided, over the first interface, to the network control system. Optionally the states of the network devices may be taken into account in the responses.

The responses may be selected based on states of network devices of the telecommunication network as maintained in the test system or based on states collected from the production environment. Additionally or alternatively, the responses may be selected at least partially based on predefined parameters of the respective test case.

In a yet further embodiment, the test system interacts with the production environment over the second interface to check how the production environment would respond to the command. In an embodiment, this is applied only to certain type of commands, such as registering to a network device, but not to some that may cause unintended interruptions in the production environment, such as resetting a network device or blocking a cell.

In some embodiments, the responses may comprise indication of one or more of the following: successful operation, failed operation, successful registration to the network device, failed registration to the network device, successful reset operation, failed reset operation, successful shut down operation, failed shut down operation, successful login operation, failed login operation, successful cell block operation, failed cell block operation, failed connection to the network device, unexpectedly dropped connection to a network device, network device not found, unexpected error.

308: Next actions of the network control system are then monitored. The next actions may comprise further commands that specify action(s) in the telecommunication network. Again, the monitoring may be performed for a predefined period of time.

309: Operation of the network control system is evaluated based on the one or more next actions or lack of next actions of phase 308. Further, the evaluation may be based on the command and/or lack of commands of phase 305.

The evaluation of the operation of the network control system may be based on checking type, syntax and/or timing of the command(s) and/or next action(s). Checking the type may comprise checking that an expected command or action is submitted and/or that a command or action is directed to an expected network device. Lack of expected command or action may be an indication of malfunctioning network control system. Likewise, wrong type, syntax and/or timing of the command(s) and/or next action(s) may be an indication of malfunctioning network control system. The test system may comprise rules that define expected command(s) and actions(s) in different cases and the evaluation may be performed based on such rules.

Results of the evaluation may be output from the test system as such without further processing. That is, the test system may output a listing of test cases and respective information on whether the type, syntax and/or timing of the responsive commands was expected or not. Alternatively, the test system may output an indication of the network control system operating as expected or not operating as expected.

Phase 307 provides conditions that the network control system would normally see in production environment. In this way, the test system emulates operation of the telecommunication network.

The following lists some example combinations of commands from the network control system and responses that the test system may provide depending on the case:
Command -> Response | An alternative response
Login with operator account -> Login successful | Login failed
Register into an element -> Success | Element not found | Element is unreachable
List active alarms -> Listing of active alarms | No active alarms
Display boards at specific location (e.g. cabinet) -> Listing of boards
Logout -> Successful
Reset board using power on off -> Reset successful | Reset failed
List cells -> Listing of cells | No cells
Block specific cell -> Operation successful | Operation failed
Reset base station -> Operation successful | Operation failed
Unblock specific cell -> Operation successful | Operation failed

Some example embodiments provide possibility to freely define test cases to be executed. There may be for example a testing interface though which tests can be defined and execution of the tests can be monitored. Some example embodiments that involve test system interacting with the production environment provide possibility to monitor operation of the network control system in situations that substantially correspond to real situations in the production environment.

As an illustrative non-limiting example, a test case is defined for confirming whether the network control system performs resetting of a base station as expected. First, alert(s), which should result in base station reset, are provided to the network control system (either from the production environment or from the test system). Then the test system waits until reset counter in the target base station is incremented by 1. After this, execution of the test case may continue to next phase. In this way, minor delay in the reset operation (or other expected operation) does not fail the test.

However, if the expected reset is not detected, it is concluded that the test failed and the network control system does not operate as intended.

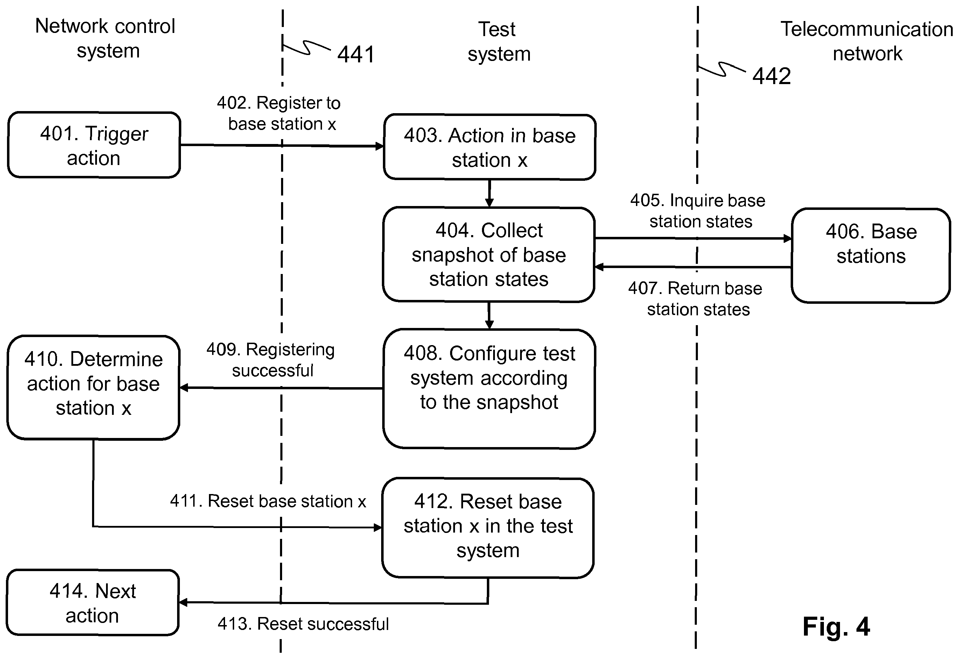

Fig. 4 shows a flow diagram of an example case. Fig. 4 shows a network control system, a test system and a telecommunication network. A dashed line 441 illustrates a first interface of the test system and a dashed line 442 illustrates a second interface of the test system. The first interface is configured for interacting with the network control system and the second interface is configured for interacting with the telecommunication network.

The shown example case operates as follows:
401: An action is triggered in the network control system for example based on certain combination of alerts appearing in the telecommunication network or certain combination of alerts provided by the test system.
402: The network control system sends a command to register to a base station x. The command is received at the first interface of the test system.
403: The test system identifies that an action in base station x is requested.
404: The test system collects a snapshot of base station states. Depending on the case, the test system may collect state of the base station x or states of plurality of base stations may be collected in order to obtain larger picture of the current state of the telecommunication network. The snapshot of base station states is collected by sending one or more state inquiries 405 to the telecommunication network over the second interface. In response, states are collected from base stations 406 and returned 407 to the test system.
408: The snapshot of base station states is stored in the test system and the test system is configured accordingly.

Additionally, the snapshot of base station states may be provided to data researchers and domain experts for further analysis. In this way, the collected states may be used in further analysis and network planning.

409: Based on the base station states, a registering successful response is provided to the network control system over the first interface.

410: The network control system determines an action for the base station x. The action in this example is to reset the base station x.

411: The network control system sends a command to reset the base station x. The command is received at the first interface of the test system. This is a next action monitored by the test system.

412: The test system resets the base station x in the current configuration of the test system. That is, the test system changes state of the base station x in the test system.

413: The test system returns a reset successful response to the network control system. In an alternative case, the test system could return a reset failed response to the network control system in order to monitor, how the network control system reacts to such situation.

414: The network control system continues with determining a next action and the test system monitors whether expected next action is taken.

The test system evaluates operation of the network control system based on the commands 402 and 411 and possible further commands seen after phase 414. For example, if the command 411 to reset the base station x would not be seen or some other command would be seen instead of the command 411 to reset the base station x, the test system may conclude that the network control system failed the test.

It is to be noted that Fig. 4 shows only one example flow of actions. It is clear that many other alternative options are possible.

Without in any way limiting the scope, interpretation, or application of the claims appearing below, a technical effect of one or more of the example embodiments disclosed herein is an effective method to test automatic monitoring and control of telecommunication networks. By the test system of various embodiments, testing in real world production environment is not needed. From the network control system perspective, the first interface of the test system is equal to control interface of the telecommunication network and therefore substantial changes are not needed in the network control system in order to execute the tests. Merely a pointer to the test system may be needed instead of a pointer to the control interface of the telecommunication network. Once the network control system has been tested using the test system of present disclosure, the network control system may be taken into actual use in the production environment.

If desired, the different functions discussed herein may be performed in a different order and/or concurrently with each other. Furthermore, if desired, one or more of the before-described functions may be optional or may be combined

Various embodiments have been presented. It should be appreciated that in this document, words comprise, include and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A computer implemented method for providing a test system (111) for testing a network control system (102), **characterized in that** the network control system is configured to automatically analyze alerts and other incidents from a telecommunication network (101) and to perform automatic actions and failure correction in the telecommunication network (101) based on this information, the method comprising performing in the test system:
interacting (301) with the network control system (102) over a first interface of the test system, wherein the first interface is configured to emulate operation of a control interface of the telecommunication network;
monitoring (305) over the first interface, whether a command associated with a network device of the telecommunication network is received from the network control system;
based on the received command, providing (307), over the first interface, to the network control system, one or more responses;
monitoring (308) one or more next actions of the network control system; and
evaluating (309) operation of the network control system based on the received command or lack of received command and/or based on the one or more next actions or lack of next actions.

2. The method of claim 1, further comprising
updating and maintaining states of network devices of the telecommunication network in the test system; and
taking the states of the network devices into account in the one or more responses.

3. The method of claim 1, further comprising
interacting (302) with the control interface of the telecommunication network (101) over a second interface of the test system;
collecting, over the second interface, states of one or more network devices of the telecommunication network; and
taking the collected states of the one or more network devices into account in the one or more responses.

4. The method of any preceding claim, further comprising
sending, to the network control system, over the first interface, one or more alerts and/or network performance data in order to trigger the network control system to send the command.

5. The method of claim 3, further comprising
monitoring, over the second interface, alerts and/or network performance data appearing in the telecommunication network; and
monitoring the first interface in expectation of receiving a command sent responsive to the alerts and/or network performance data appearing in the telecommunication network.

6. The method of any preceding claim, wherein the control interface of the telecommunication network is an OSS interface.

7. The method of any preceding claim, wherein the received command specifies one or more actions in the network device of the telecommunication network.

8. The method of any preceding claim, wherein the command and/or the next action relates to one or more of the following: registering to a network device, resetting a network device, shutting down a network device, login to a network device, blocking a cell.

9. The method of any preceding claim, wherein the one or more responses comprise indication of one or more of the following: successful operation, failed operation, successful registration to the network device, failed registration to the network device, successful reset operation, failed reset operation, successful shut down operation, failed shut down operation, successful login operation, failed login operation, successful cell block operation, failed cell block operation, failed connection to the network device, unexpectedly dropped connection to a network device, network device not found, unexpected error.

10. An apparatus (20, 111) comprising
a processor (21), and
a memory (22) including computer program code; the memory and the computer program code configured to, with the processor, cause the apparatus to perform the method of any one of claims 1-9.

11. A computer program comprising computer executable program code (23) which when executed by a processor causes an apparatus to perform the method of any one of claims 1-9.

## Patentansprüche

1. Computerimplementiertes Verfahren zum Bereitstellen eines Testsystems (111) zum Testen eines Netzwerksteuersystems (102),
**dadurch gekennzeichnet, dass**
das Netzwerksteuersystem so konfiguriert ist, dass automatisch Warnmeldungen und andere Störungen von einem Telekommunikationsnetzwerk (101) analysiert werden und dass automatische Aktionen und Fehlerkorrektur in dem Telekommunikationsnetzwerk (101) auf der Grundlage dieser Informationen durchgeführt werden, wobei das Verfahren umfasst Durchführen in dem Testsystem:
Interagieren (301) mit dem Netzwerksteuersystem (102) über eine erste Schnittstelle des Testsystems, wobei die erste Schnittstelle so konfiguriert ist, dass der Betrieb einer Steuerschnittstelle des Telekommunikationsnetzwerks emuliert wird;
Überwachen (305) über die erste Schnittstelle, ob ein mit einem Netzwerkgerät des Telekommunikationsnetzwerks verbundener Befehl von dem Netzwerksteuersystem empfangen wird;
Bereitstellen (307) von einer oder mehreren Antworten über die erste Schnittstelle an das Netzwerksteuersystem auf der Grundlage des empfangenen Befehls;
Überwachen (308) von einer oder mehreren nächsten Aktionen des Netzwerksteuersystems; und
Auswerten (309) des Betriebs des Netzwerksteuersystems auf der Grundlage des empfangenen Befehls oder des Fehlens des empfangenen Befehls und / oder auf der Grundlage der einen oder mehreren nächsten Aktionen oder des Fehlens der nächsten Aktionen.

2. Verfahren nach Anspruch 1, ferner umfassend
Aktualisieren und Aufrechterhalten von Zuständen von Netzwerkgeräten des Telekommunikationsnetzwerks in dem Testsystem; und
Berücksichtigen der Zustände der Netzwerkgeräte in der einen oder den mehreren Antworten.

3. Verfahren nach Anspruch 1, ferner umfassend
Interagieren (302) mit der Steuerschnittstelle des Telekommunikationsnetzwerks (101) über eine zweite Schnittstelle des Testsystems;
Erfassen von Zuständen eines oder mehrerer Netzwerkgeräte des Telekommunikationsnetzwerks über die zweite Schnittstelle; und
Berücksichtigen der erfassten Zustände des einen oder der mehreren Netzwerkgeräte in der einen oder den mehreren Antworten.

4. Verfahren nach einem der vorhergehenden Ansprüche, ferner umfassend
Senden einer oder mehrerer Warnmeldungen und / oder Netzwerkleistungsdaten über die erste Schnittstelle an das Netzwerksteuersystem, um das Netzwerksteuersystem zum Senden des Befehls zu veranlassen.

5. Verfahren nach Anspruch 3, ferner umfassend
Überwachen von Warnmeldungen und / oder Netzwerkleistungsdaten, die in dem Telekommunikationsnetzwerk erscheinen, über die zweite Schnittstelle; und
Überwachen der ersten Schnittstelle in Erwartung des Empfangs eines Befehls, der als Reaktion auf die in dem Telekommunikationsnetzwerk erscheinenden Warnmeldungen und / oder Netzwerkleistungsdaten gesendet wird.

6. Verfahren nach einem der vorhergehenden Ansprüche, wobei die Steuerschnittstelle des Telekommunikationsnetzwerks eine OSS-Schnittstelle ist.

7. Verfahren nach einem der vorhergehenden Ansprüche, wobei der empfangene Befehl eine oder mehrere Aktionen in dem Netzwerkgerät des Telekommunikationsnetzwerks spezifiziert.

8. Verfahren nach einem der vorhergehenden Ansprüche, wobei der Befehl und / oder die nächste Aktion sich auf eines oder mehrere der folgenden bezieht: Registrierung bei einem Netzwerkgerät, Zurücksetzen eines Netzwerkgeräts, Herunterfahren eines Netzwerkgeräts, Anmeldung bei einem Netzwerkgerät, Blockieren einer Zelle.

9. Verfahren nach einem der vorhergehenden Ansprüche, wobei die eine oder mehreren Antworten Angabe eines oder mehrerer der folgenden umfasst: erfolgreicher Betrieb, fehlgeschlagener Betrieb, erfolgreiche Registrierung bei dem Netzwerkgerät, fehlgeschlagene Registrierung bei dem Netzwerkgerät, erfolgreicher Rücksetzvorgang, fehlgeschlagener Rücksetzvorgang, erfolgreicher Abschaltvorgang, fehlgeschlagener Abschaltvorgang, erfolgreicher Anmeldevorgang, fehlgeschlagener Anmeldevorgang, erfolgreicher Zellenblockierungsvorgang, fehlgeschlagener Zellenblockierungsvorgang, fehlgeschlagene Verbindung zu dem Netzwerkgerät, unerwartet abgebrochene Verbindung zu einem Netzwerkgerät, Netzwerkgerät nicht gefunden, unerwarteter Fehler.

10. Gerät (20, 111), umfassend
einen Prozessor (21) und
einen Speicher (22), der Computerprogrammcode enthält; wobei der Speicher und der Computerprogrammcode so konfiguriert sind, dass sie mit dem Prozessor veranlassen, dass das Gerät das Verfahren nach einem der Ansprüche 1-9 durchführt.

11. Computerprogramm, umfassend computerausführbaren Programmcode (23), der bei Ausführung durch einen Prozessor veranlasst, dass ein Gerät das Verfahren nach einem der Ansprüche 1-9 durchführt.

## Revendications

1. Un procédé mis en œuvre par ordinateur pour fournir un système de test (111) pour tester un système de contrôle de réseau (102), **caractérisé en ce que** le système de contrôle de réseau est configuré pour analyser automatiquement des alertes et d'autres incidents provenant d'un réseau de télécommunication (101) et pour effectuer des actions automatiques et une correction de défaillance dans le réseau de télécommunication (101) sur la base de ces informations, le procédé comprenant la mise en œuvre, dans le système de test :
du fait (301) d'interagir avec le système de contrôle de réseau (102) sur une première interface du système de test, la première interface étant configurée pour émuler le fonctionnement d'une interface de contrôle du réseau de télécommunication ;
du fait (305) de surveiller sur la première interface, si une commande associée à un dispositif de réseau du réseau de télécommunication est reçue en provenance du système de contrôle de réseau ;
sur la base de la commande reçue, du fait (307) de fournir, sur la première interface, au système de contrôle de réseau, une ou plusieurs réponses ;
du fait (308) de surveiller une ou plusieurs actions suivantes du système de contrôle de réseau ; et
du fait (309) d'évaluer le fonctionnement du système de contrôle de réseau en fonction de la commande reçue ou de l'absence de commande reçue et/ou en fonction de la ou des actions suivantes ou de l'absence d'actions suivantes.

2. Le procédé selon la revendication 1, comprenant en outre
le fait de mettre à jour et de maintenir des états de dispositifs de réseau du réseau de télécommunication dans le système de test ; et
le fait de prendre en compte les états des dispositifs de réseau dans la ou les réponses.

3. Le procédé selon la revendication 1, comprenant en outre
le fait (302) d'interagir avec l'interface de contrôle du réseau de télécommunication (101) sur une deuxième interface du système de test ;
le fait de collecter, sur la deuxième interface, des états d'un ou plusieurs dispositifs de réseau du réseau de télécommunication ; et
le fait de prendre en compte les états collectés du ou des dispositifs de réseau dans la ou les réponses.

4. Le procédé selon l'une quelconque des revendications précédentes, comprenant en outre
le fait d'envoyer au système de contrôle de réseau, sur la première interface, une ou plusieurs alertes et/ou données de performances de réseau afin de déclencher l'envoi de la commande par le système de contrôle de réseau.

5. Le procédé selon la revendication 3, comprenant en outre
le fait, sur la deuxième interface, de surveiller des alertes et/ou des données de performances de réseau apparaissant dans le réseau de télécommunication ; et
le fait de surveiller la première interface en attente de recevoir une commande envoyée en réponse aux alertes et/ou données de performances de réseau apparaissant dans le réseau de télécommunication.

6. Le procédé selon l'une quelconque des revendications précédentes, dans lequel l'interface de contrôle de réseau de télécommunication est une interface OSS.

7. Le procédé selon l'une quelconque des revendications précédentes, dans lequel la commande reçue spécifie une ou plusieurs actions dans le dispositif réseau du réseau de télécommunication.

8. Le procédé selon l'une quelconque des revendications précédentes, dans lequel la commande et/ou l'action suivante concerne un ou plusieurs parmi ce qui suit : le fait de s'enregistrer sur un dispositif réseau, de réinitialiser un dispositif réseau, d'arrêter un dispositif réseau, de se connecter sur un dispositif réseau, de bloquer une cellule.

9. Le procédé selon l'une quelconque des revendications précédentes, dans lequel la ou les réponses comprennent l'indication d'un ou de plusieurs parmi ce qui suit : opération réussie, opération échouée, enregistrement réussi sur le dispositif réseau, enregistrement échoué sur le dispositif réseau, opération de réinitialisation réussie, opération de réinitialisation échouée, opération d'arrêt réussie, opération d'arrêt échouée, opération de connexion réussie, opération de connexion échouée, opération de blocage de cellules réussie, opération de blocage de cellules échouée, connexion échouée sur le dispositif réseau, connexion interrompue de manière inattendue sur un dispositif réseau, dispositif réseau non trouvé, erreur inattendue.

10. Un appareil (20, 111) comprenant
un processeur (21), et
une mémoire (22) comprenant un code de programme informatique ; la mémoire et le code de programme informatique étant configurés pour, avec le processeur, amener l'appareil à mettre en œuvre le procédé selon l'une quelconque des revendications 1 à 9.

11. Un programme informatique comprenant un code de programme exécutable par ordinateur (23) qui, lorsqu'il est exécuté par un processeur, amène un appareil à mettre en œuvre le procédé selon l'une quelconque des revendications 1 à 9.
